# EUROPEAN PATENT APPLICATION

(11) **EP 2 388 714 A1**
(43) Date of publication of application: **23.11.2011**
(21) Application number: 10173893.8
(22) Date of filing: 24.08.2010
(51) Int. Cl.: G06F 17/30, G06F 3/048

(54) **Apparatus and method for segmentation of web pages**

(30) Priority: 19.05.2010 KR 20100046951
(71) Applicant: SAMSUNG ELECTRONICS CO., LTD., Suwon-si Gyeonggi-do 442-742 (KR)
(72) Inventor: Choi, Sung-wook, Gyeonggi-do (KR)
(74) Representative: Fearnside, Andrew Simon

(57) **Abstract**

Provided are a display device and method for displaying and controlling a web page on a display device, the method including: receiving web page information (S501); grouping the web page information into at least one segment; displaying a web page (S505) based on the web page information and a selector which is navigable among the at least one segment; receiving a navigational command for navigating the selector; and controlling the selector to move among the at least one segment based on the received navigational command.

## Description

### BACKGROUND OF THE INVENTION

### Field of the Invention

Apparatuses and methods consistent with the present invention relate to segmenting web pages, and more particularly to an apparatus and method thereof for segmenting, displaying and navigating segmented web pages.

### Description of the Related Art

Typically, a user may use a pointing device (e.g., a mouse) in order to perform various functions on a web page, such as selecting from among different items or links on a web page, navigating to different parts of the web page, etc. However, sometimes a user may use a web browser without the benefit of having a pointing device. For example, a user displaying a web page on a television may only have a remote control with which she can control the operations of the displayed web page. If the remote control lacks a pointing function (e.g., like a mouse), or even if the displayed web page include a large number of components, the user may be unable to quickly and/or efficiently navigate to the different parts/components of the displayed web page. Consequently, additional functionality is desired in such situations.

### SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

An aspect of the present invention may provide a display device including: an input unit which receives web page information; a segmenting unit which groups the web page information into at least one segment; a display screen which displays a web page based on the web page information and a selector which is navigable among the at least one segment; a command receiving unit is operable to receive a navigational command for navigating the selector; and a controller, wherein if the navigational command is received, the controller controls the selector to move among the at least one segment based on the received navigational command.

The web page information may be grouped into the at least one segment based on a hierarchical organization of the web page information.

The web page information may be organized according to a Document Object Model (DOM) hierarchy, and wherein the segmenting unit groups the web page information based on the DOM hierarchy.

A boundary line may be displayed between each of the at least one segment.

The web page may be displayed so that each of the at least one segment is visually distinguishable.

Each of the at least one segment may be visually distinguishable by displaying a boundary line between each of the at least one segment.

The navigational command may be received from a remote control.

The selector may be further navigable among the web page information within each of the at least one segment.

The selector may be operable to highlight and select a segment from among the at least one segment, the command receiving unit may be further operable to receive the selection command, and if the selection command is received and the segment is highlighted, the controller may further control the highlighted segment to be selected.

The web page information may include at least one hyperlink.

Another aspect of the present invention may include a method for displaying and controlling a web page on a display device, the method including: receiving web page information; grouping the web page information into at least one segment; displaying a web page based on the web page information and a selector which is navigable among the at least one segment; receiving a navigational command for navigating the selector; and controlling the selector to move among the at least one segment based on the received navigational command.

The selector may be operable to highlight and select a segment from among the at least one segment, and if the selection command is received and the segment is highlighted, the method may further comprise selecting the highlighted segment.

Another aspect of the present invention provides a method for segmenting a web page on a display device, the method may include: receiving web page information; determining at least one segment for the received web page information by performing a Document Object Model (DOM) tree analysis on the received web page information; determining a size of the at least one segment; if the determined size of the at least one segment is larger than a predetermined value, performing an image processing analysis on the at least one segment, wherein the image processing analysis determines a plurality of sub-segments for the at least one segment; and displaying the web page on the display device, wherein the displayed web page is navigable based on the determined at least one segment and the plurality of sub-segments.

### BRIEF DESCRIPTION OF THE DRAWINGS

The above and/or other aspects of the present invention will become apparent and more readily appreciated from the following description of the exemplary embodiments, taken in conjunction with the accompanying drawings of which:
FIGS. 1A and 1B illustrate examples according to an exemplary embodiment of the present invention;
FIG. 2 illustrates an example of an operation of an apparatus according to an exemplary embodiment of the present invention;
FIGS. 3A to 3D illustrate an operation of an apparatus according to an exemplary embodiment of the present invention;
FIGS. 4A to 4C illustrate examples of operations according to exemplary embodiment of the present invention;
FIG. 5 illustrates an example of an operation according to exemplary embodiment of the present invention;

### DETAILED DESCRIPTION OF THE EXEMPLARY EMBODIMENTS

Hereinafter, exemplary embodiments of the present invention will be described with reference to accompanying drawings, wherein like numerals refer to like elements and repetitive descriptions will be avoided as necessary.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

As used herein, the term "navigate" means to move, move around, move towards, etc. For example, a user may navigate from one web page to another by clicking a link. More generally, a user may navigate a pointer or a selector within a web page by simply moving the pointer or selector in some desired direction. Further, as used herein, the term "navigate" may also include selecting individual elements within a displayed web page.

The terms "group" and "segment" are used interchangeably herein. Likewise the terms "grouping" and "segmenting," etc., are also used interchangeably herein.

As used herein, "web page information" includes HTML data, hyperlinks, text, images, or any other data which may be found within a web page, i.e., including data which may not necessarily be displayed. Also, the phrase "displayed web page information" means any information within the web page information which is actually displayed.

The term "hyperlinks" and "link" are used interchangeably herein.

The terms "selector" and "selection box" are used interchangeably herein

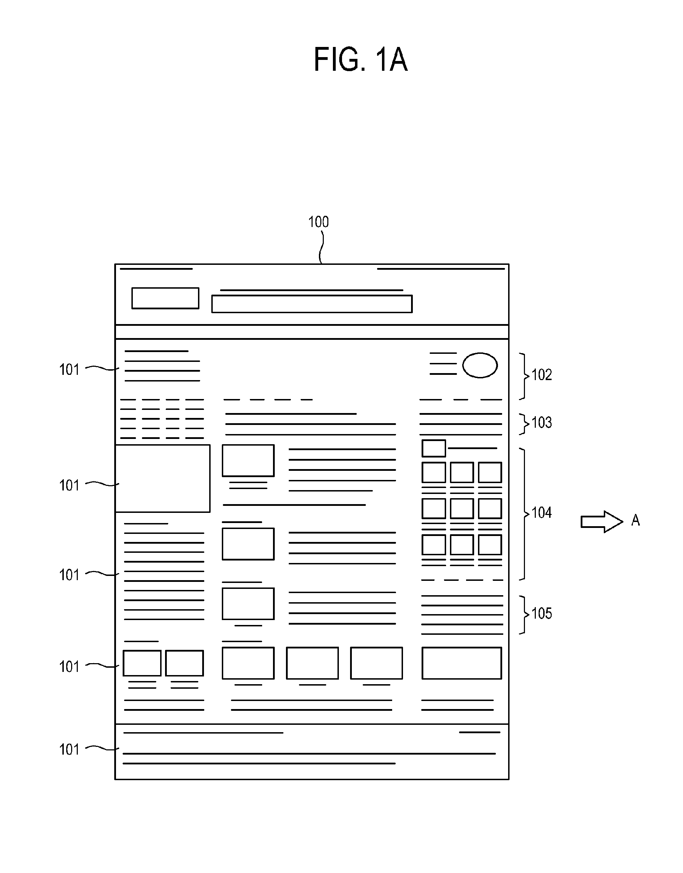

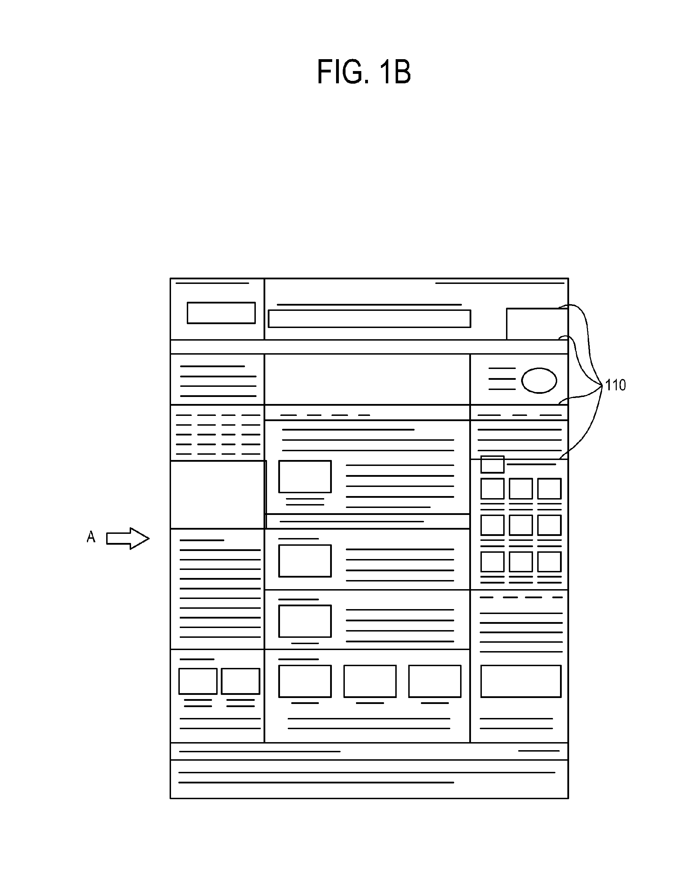

FIG. 1A shows an example of a web page 100 having multiple areas 101 which include various pieces of information. The information within each of the areas 101 may be associable, i.e., capable of being associated, joined, or connected in some way. For example, from a viewer's perspective the information within area 102 might logically be grouped together. All of the individual pieces of information within area 102 are within close proximity to each other, as seen from the viewer's vantage point. The same may be said for the information within areas 103, 104 and 105. Thus, the information within each of the areas 102-105, respectively, might be logically grouped together as a segment. FIG. 1B shows an example of how a displayed web page 100 might appear with visual boundary lines 110 displayed between segments.

Once the web page is segmented, it may become easier for a user to navigate. For example, if a user has a small display screen, or if the user only has a remote control with which to navigate the displayed web page, it may be more efficient for the user to use directional key commands to skip from one segment to another. By navigating the displayed we page from one segment to another, the user might avoid having to input directional commands which only move from one element to another (e.g., using the TAB key on a keyboard). In other word, by segmenting a displayed web page, it is possible to reduce the number of keystrokes required to circumnavigate an entire displayed web page.

There are various ways of segmenting the information within a web page. For example, a web page may simply be equally divided into a symmetrical grid (e.g., a 3x3 grid, resulting in 9 equal squares). Alternatively, it is possible to analyze a web page using vision-based, i.e., image processing-based techniques. In other words, the image of a displayed web page may be analyzed using various image processing techniques to determine which elements of the displayed web page should be grouped together. For example, a group of stock prices located on a particular part of a displayed web page might be recognized and determined to be close physically (i.e., on the displayed web page) and/or as being information of a similar type (i.e., financial information). Another example might involve the grouping of a plurality of images on a web page, whereby each image might include similar features (e.g., a face of a particular individual). Thus, depending on the image processing technique employed, it is possible to analyze and group similar objects within a web page based on some predetermined criteria. Further, a web page may be analyzed and segmented using the Document Object Model (DOM) (described hereinbelow). Exemplary embodiments of the present invention may utilize any of the above-noted techniques, as well as other web-page segmentation techniques, and/or some combination thereof.

Some of the above segmentation techniques may have advantages over others, depending on the situation in which they may be used. For example, if the displayed web page includes a large image, a simple symmetrical grid might not be the best way of segmenting the displayed page since the image may be broken into segments which are not logically separable. Alternatively, the web page information might include a large table. A DOM tree analysis might result in many segments on the displayed web page such that a user would find navigation among the many segments to be cumbersome. Therefore, one segmentation technique might work better than another depending on the situation. Further, some situations might be best served with a combination of segmentation techniques.

The DOM is a cross-platform, language-neutral convention for representing and interacting with objects in documents encoded by a web page markup language such as HyperText Markup Language (HTML), Extensible Hypertext Markup Language (XHTML), Extensible Markup Language (XML), etc. The DOM interface provides a way to dynamically process and use web page information. It is also possible to incorporate the results of the processing back into the displayed web page. Thus, the content of the web page can be dynamically accessed and updated.

For example, the DOM allows a web page's information to be viewed as a tree structure where each web page element may be represented by a node in the tree. Each node can be viewed as having a certain depth and type (among other attributes). In this way, the depth of a particular element within the tree structure, as well as the type of the particular element, might be analyzed. By analyzing the depth and/or type of the individual elements of a web page, a determination may be made as to which elements of the web page possibly share some similarities. As such, it becomes possible to classify and group together those elements which may be similar. For example, a table with several entries may be displayed as part of a web page. The underlying DOM of the web page might then show a parent node defining the existence of the table, and the table entry nodes might all have the same depth within the tree.

Referring to the example of FIG. 1A, a DOM tree for the displayed web page 100 might show parent nodes which respectively define areas 102, 103, 104 and 105 as each having the same depth within the DOM tree. However, area 102 might be defined by a parent node which has a different value from the parent node which defines areas 103, 104 and 105, respectively. For example, the parent node for area 102 might have a value corresponding to an image, whereas area 104 might have a parent node having a value corresponding to a table, etc. However, the parent nodes might have similar values or equivalent values. For example, the web page might include multiple tables, in which case the parent nodes might all have similar (e.g., indicating a large image or a small image, such as a thumbnail image) or equivalent values (e.g., indicating a table structure). Applying this type of DOM analysis, it is possible to segment the displayed web page into a number of various segments. As a result of the segmentation, the information within each segment can effectively be grouped together.

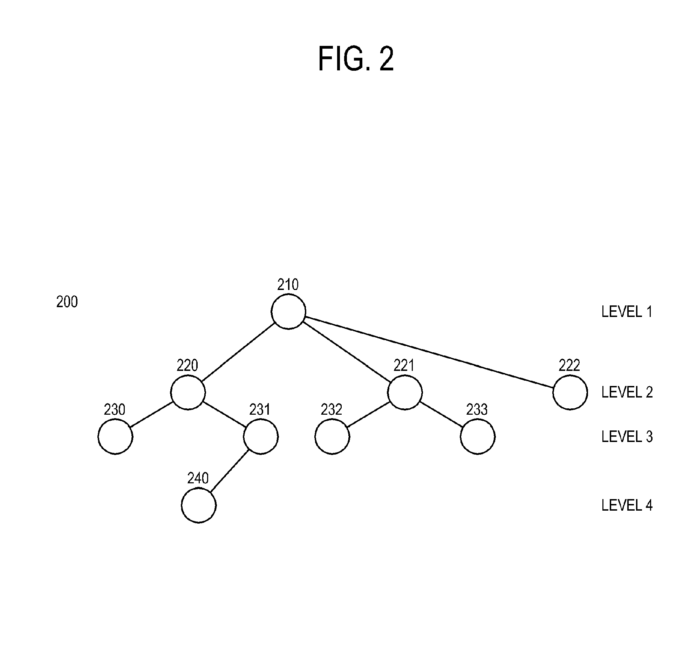

Additionally, it is possible to change the number of segments that a web page can be divided into. As indicated above, each of the components of a DOM tree can be determined as being at a certain depth within the tree. If the DOM tree analysis is performed such that only a small depth of the tree is analyzed, the result would that the information of within the web page can be divided into a fewer number of segments. On the other hand, if the DOM tree analysis is performed to a greater depth, the result would be a greater number of segments dividing the information of the web page. FIG. 2 provides an example of this.

FIG. 2 shows an example of a DOM tree 200. As shown in FIG. 2A, node 210 is at level 1, nodes 220-222 are at level 2, and nodes 230-233 are at level 3. Each leaf node (i.e., each node that has no children) may be used to define a segment on the displayed web page. Thus, if a DOM tree analysis is performed to level 3, it is possible to segment the web page information into five segments (i.e., since there are four nodes at level 3, and one leaf node at level two). Similarly, if the DOM tree analysis is performed to level 4, the web page information may be segmented into five segments, since there is one leaf node in level 4, three leaf nodes in level 3, and one leaf node in level 2. However, if the DOM tree 200 were only analyzed to a depth of level 2, the number of segments might be reduced to three, i.e., one segment for node 220, one segment for node 221 and one segment for node 222. If the DOM tree 200 were only analyzed to a depth of level 1, then only one segment might be defined for the displayed web page. Again, all of the web page information under each of the respective nodes, 220, 221 and 222 could be effectively grouped together.

It should be noted that each node may include one or more data items (not shown) (e.g., such as text) from the displayed web page. Referring to FIG. 2, if the DOM tree analysis is performed to level 3, for example, data under nodes 222, 230, 231, 232 and 233 could be grouped together, respectively.

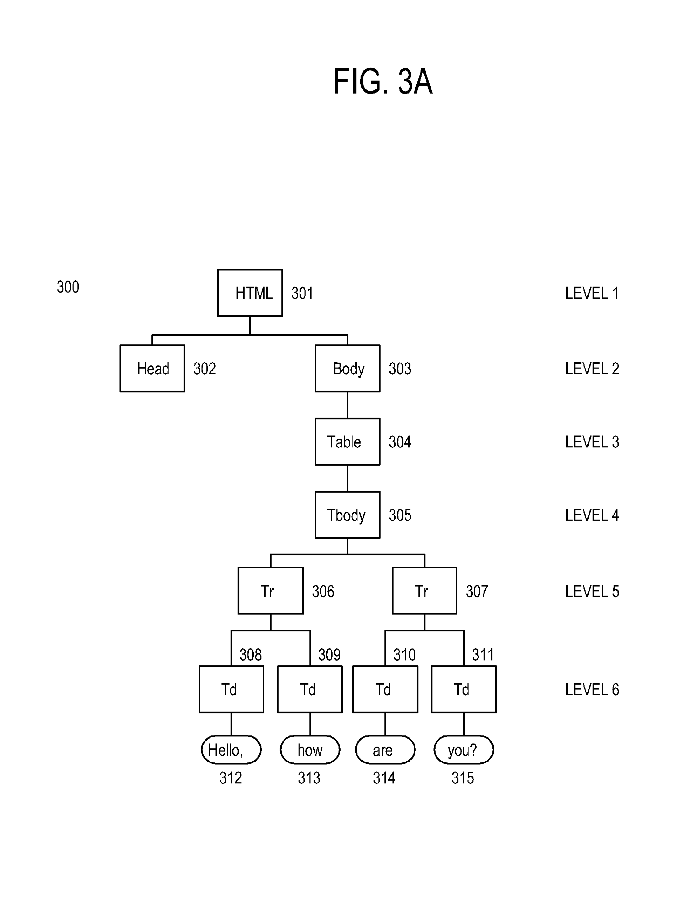

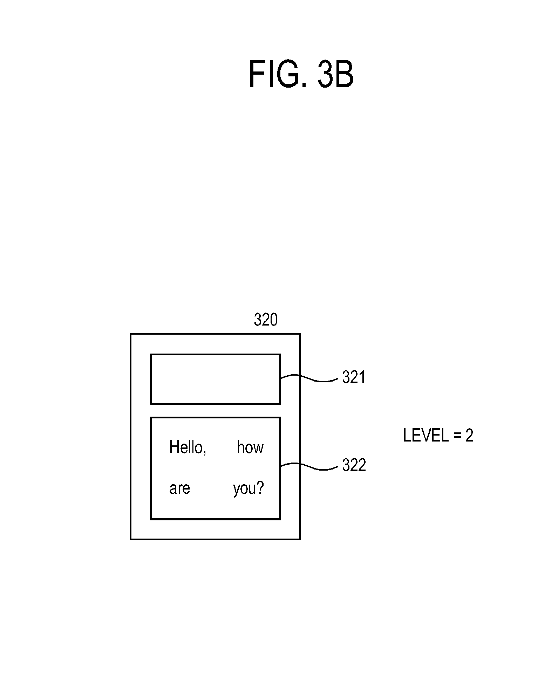

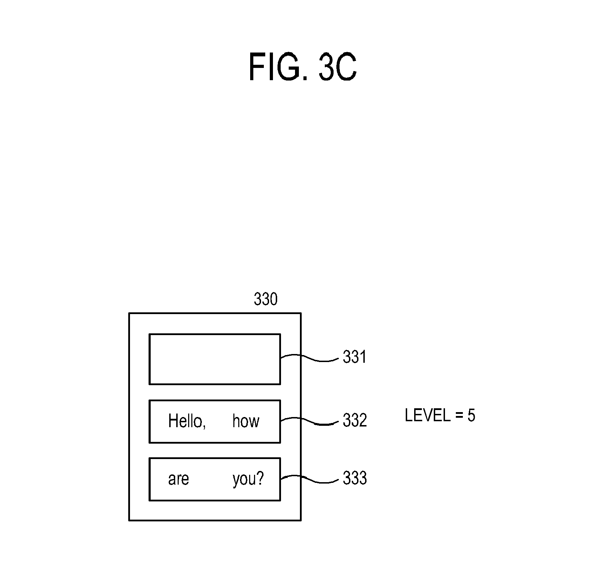

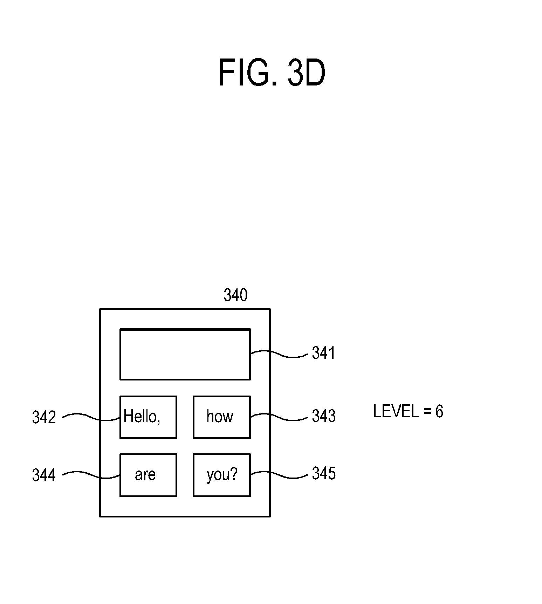

FIG. 3A shows another example of a DOM tree. FIGS. 3B, 3C and 3D respectively show displayed web pages, including visible segment lines, corresponding to three different DOM tree search depths. As shown in FIG. 3A, level 1 of the DOM tree 300 includes a root node 301 designating an HTML document. Level 2 includes nodes 302 and 303, respectively designating a Head and a Body within the HTML document. Level 3 includes node 304 defining a Table and level 4 includes node 305 defining the table body (Tbody). Level 5 includes nodes 306 and 307, which each define a row (Tr) within the table. Finally, level 6 includes nodes 308, 309, 310 and 311, which respectively designate data entries (Td) for the table. In this example, the actual data in the table is the text "Hello, how are you?" which is shown as data nodes 312, 313, 314 and 315.

In FIG. 3B, a depth of level 2 is selected. Using the DOM tree example of FIG. 3A, a displayed web page 320 includes a first segment 321 is created for the head node 302 and a second segment 322 for the body node 303. In this example, the head node 302 is shown as being empty; however, the head node 302 may include data, such as text, images, etc. The body node 303 includes the text within the data nodes 312-315. Consequently, if a user views the displayed segmented page 320, the user may navigate from the first segment 321 to the second segment 322 by inputting a single directional command, since the displayed page 320 in FIG. 3B has only two groups within which the contents of the web page have been divided, namely, the first segment 321 and the second segment 322.

In FIG. 3C, a depth of level 5 is selected. Again, the DOM tree example of FIG. 3A is used. A displayed web page 330 includes a first segment 331, which is created for the head node 302, and since the depth of level 5 is selected, a second segment 332 is created for Tr node 306 and a third segment 333 is created for Tr node 307. As with the above example, the head node 302 from FIG. 3A is shown as being empty; however, the head node 302 may include data, such as text, images, etc. Here, the Tr nodes 306 and 307 include the text within the data nodes 312-315. In this example, the words "Hello, how" are displayed within the second segment 332, and the words "are you?" are displayed in the third segment 333. Also, if the user views the displayed segmented page 330, the user may navigate from the first segment 331, to the second segment 332 and to the third segment 333 by inputting a two directional commands, if proceeding from top to bottom (i.e., from segment 331, next to segment 332 and finally to segment 333). On the other hand, it is possible for the user to input a single command and go backwards from segment 331 (i.e., from segment 331 directly to segment 333), since the displayed page 330 in FIG. 3C has three groups within which the contents of the web page have been divided, namely, the first segment 331, the second segment 332 and the third segment 333.

Similarly, in FIG. 3D, a depth of level 6 is selected. Once again, the DOM tree example of FIG. 3A is used. A displayed web page 340 includes a first segment 341, which is created for the head node 302, and since the depth of level 6 is selected, a second segment 342 is created for table data node (Td) 312, a third segment 343 is created for Td node 313, a fourth segment 344 is created for Td node 314 and a fifth segment 345 is created for Td node 315. As with the above examples, the head node 302 from FIG. 3A is shown as being empty; however, the head node 302 may include data, such as text, images, etc. Again, the body node 303 includes the text within the data nodes 312-315. In this example, the text "Hello," is displayed within the second segment 342, the text "how" is displayed in the third segment 343, the text "are" is displayed in the fourth segment 344 and the text "you?" is displayed in the fifth segment 345. Here, five segments are determined on the displayed 340 if the user views the displayed segmented page 340, the user may navigate through all of the segments 341-344 by inputting a maximum of five directional commands (i.e., from segment 341, to segment 342, to segment 343, to segment 344 and then back to segment 341).

Again, for all of the above examples, it should be noted that it is possible for the user to input directional commands so as to navigate in different directions. That is, referring to the example of FIG. 3D, a user may navigate in a direction from segment 341 forward toward segment 345 (i.e., going through 342-344), or the user may navigate from segment 341 backward directly to segment 345. In this example (as well as all of the other analogous examples described above), the choice of the first segment as being segment 341 is purely arbitrary. In other words, an initial input for a navigational command need not begin a segment navigation operation at the uppermost segment. Instead, an exemplary embodiment of the present invention may be implemented so as to begin navigation at any of the segments determined within the displayed web page. Further, it is also possible to navigate from left to right or vice versa, from up to down or vice versa, or even diagonally.

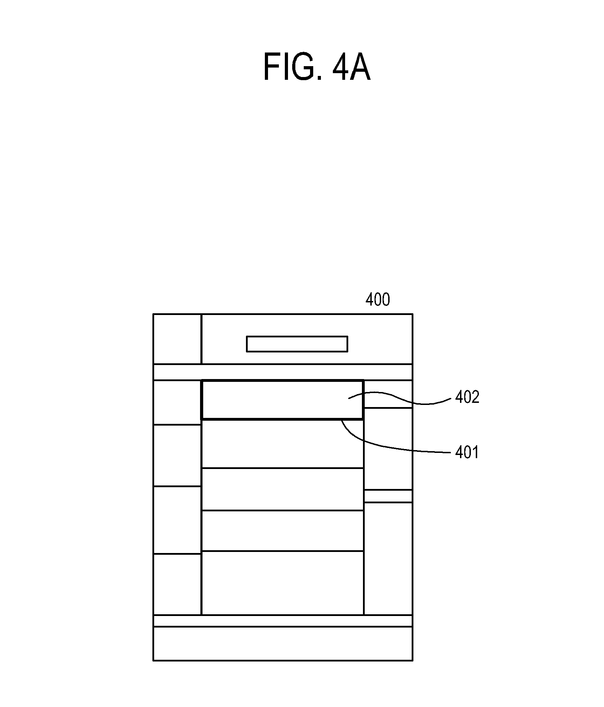

In order to perform a navigation of a segmented web page, a user might use a remote control to enter directional commands. Additionally, a user might select a particular segment by entering a selection command, e.g., by selecting a selection button (or a touch pad, etc.) on the remote control. FIG. 4A illustrates an example of a displayed web page 400 having multiple segments (shown as lines within the displayed web page 400). A selection box 401 is shown so as to be located on a segment 402.

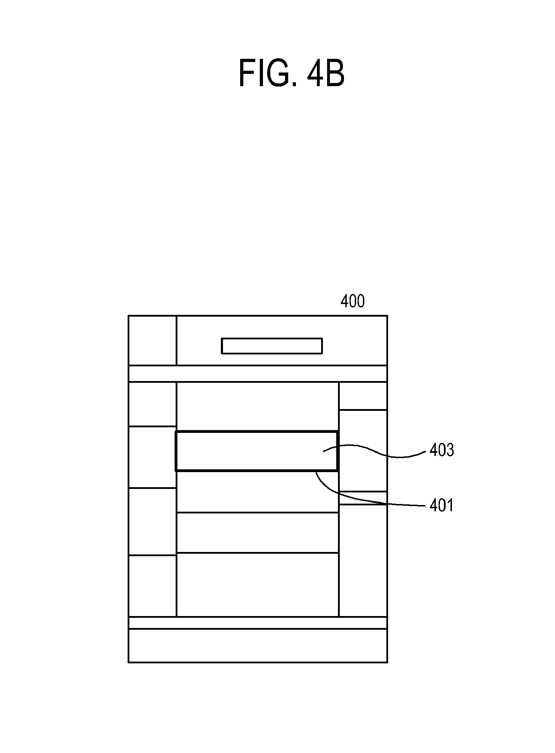

FIG. 4B shows the new location for the selection box after the receipt of a user's navigational command. The selection box may be implemented in various ways. For example, the selection box may appear (with respect to the other parts of the displayed web page) as a bold line, and/or as a highlighted box, and/or as a zoomed portion, and/or as colored or shaded region, etc. If a navigational command is received (e.g. using directional keys or a touch pad on a remote control) the selection box 401 may be moved in a downward direction, for example, to a different segment 403 on the displayed web page. In this way, a user is able to quickly navigate a web page which may include many different elements. It should be noted that although this example shows a selection box which appears as a bold line around a visible segment, the selection box does not have to be visibly distinct in this particular way.

Furthermore, with respect to displaying of the segmented web page, the segments may be depicted in a way so that they are visually distinguishable from each other. That is, segments may be displayed so that a viewer of the displayed web page can easily see the individual segments on the displayed web page. According to exemplary embodiments of the present invention, it is possible to display visually distinguishable segments in various ways. For example, lines might be drawn between the segments, or segments may be shown using different colors/shading techniques, etc. In any case, the result would be the same: visually distinguishable segments on the displayed web page. Consequently, it may be easier for a user to quickly view the various segments of a displayed web page and thus, quickly navigate to individual locations within the displayed web page.

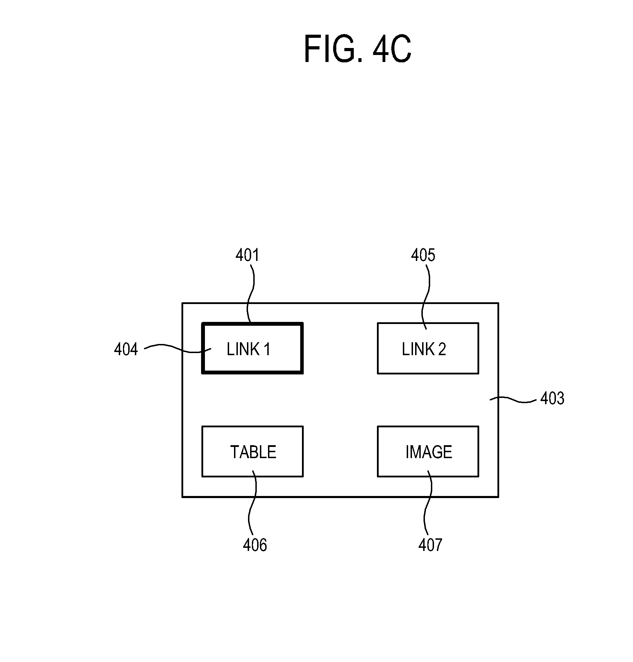

As noted above, once a segment is highlighted it may be selected, e.g., by a user entering a selection command on a remote control. Once a segment is selected, a user may then further navigate among individual elements within selected segment. FIG. 4C shows an example of such an operation, according to an exemplary embodiment of the present invention. In FIG. 4C, the segment 403 has been selected, and the selection box 401 is highlighting a link, "Link 1" 404, within segment 403. At this point, a user may enter additional navigational commands and navigate to the other elements 405, 406 and 407, within segment 403. Any of the items 404-407 may also be selected by inputting a selection command, such as described above.

Additionally, it is possible to perform additional segmentations on selected items within a selected segment. For example, "Table" 406 might include a number of table entries (not shown) which may be cumbersome for a user to navigate among. Consequently, a user may wish to perform a segmentation operation, such as described above, on the table entries of "Table" 406.

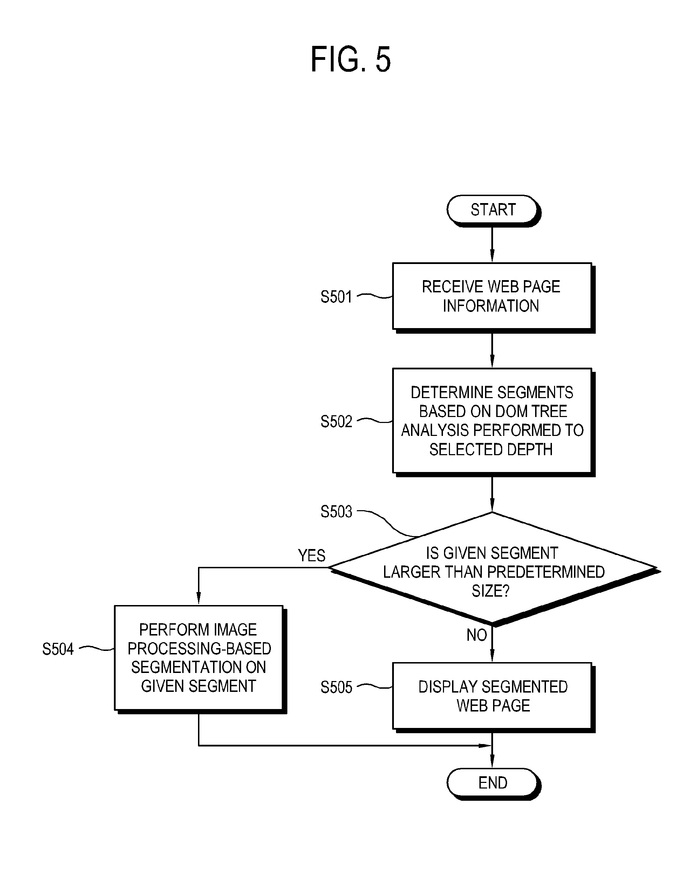

As noted above, it is possible to perform a combination of segmentation techniques on a web page. FIG. 5 shows a flow chart of an operation according to an exemplary embodiment of the present invention. As shown in FIG. 5, in operation S501, web page information is received. Next, in operation S502, segments are determined for the web page information using a DOM tree analysis to a chosen depth, such as described above. At this point, the size of a given segment can be determined and compared to a predetermined value. For example, if the given segment is determined as being too large (S503-Y), an additional segmentation operation can be performed to further segment the web page information within the given segment. That is, if the determined size of a given segment is larger than a predetermined value, an image processing analysis may be performed on the given segment, whereby the given segment is further divided into a plurality of sub-segments. In the example of FIG. 5, an image-based segmentation S504 is performed, such as described above. Finally, the segmented web page can be displayed (S505). As a result, the displayed web page may be navigable based on both given segment and the plurality of sub-segments.

It should be noted that the determination of operation S503 can be performed for each segment resulting from the DOM tree segmentation (S502) prior to the displaying of the segmented web page (S505). Alternatively, the determination might also determine whether the given segment is smaller than a predetermined size, and if not, then the additional segmentation operation (S504) can be performed to further divide the given segment into additional segments.

Furthermore, the additional segmentation operation (S504) might utilize a different segmentation method besides the image processing-based method shown in FIG. 5 (e.g., the grid technique, or even an additional DOM tree analysis). Likewise, the first segmentation operation S502 may be accomplished by another technique besides the DOM tree-based analysis. In any event, multiple segmentation operations can be applied to a web page so as to attain an optimal segmentation for the user.

As an alternative to the operation S503 shown in FIG. 5, it is possible to determine whether the number of segments resulting from the initial segmentation S502 is less than a predetermined number. For example, if only a single segment results from the operation S502, an additional segmentation may be performed to further divide the displayed web page into a more navigable set of components for the user.

It should further be noted that the exemplary embodiments described herein may be performed on any type of display device which is capable of displaying a web page and receiving web page-related commands (e.g., navigational and selection commands, etc.). However the present invention is not limited thereto.

It should further be noted that the DOM tree analysis examples described above are merely exemplary, and the present invention is limited thereto. For example, the number of segments determined for a web page may be greater than the number of leaves in the DOM tree. Another segmentation technique could be employed (either before or after the DOM tree analysis) to divide the web page information into more segments (e.g., using image processing, etc.). Alternatively, the number of segments may be less than those described in the above example. For example, it is possible to limit the number of segments based only on the number of nodes in the designated search depth. Referring to FIG. 2, if a depth level of 4 is chosen, there is only one node 240 at level 4. As such, the number of segments defined might be limited to one.

Another aspect of the present invention may provide a computer-readable medium having instructions stored thereon for execution, by a microprocessor, of a method for displaying and controlling a web page on a display device, the method including: receiving web page information; grouping the web page information into at least one segment; displaying a web page based on the web page information and a selector which is navigable among the at least one segment; receiving a navigational command for navigating the selector; and controlling the selector to move among the at least one segment based on the received navigational command.

As noted above, an aspect of the invention can be embodied as computer-readable codes on a computer-readable recording medium. The computer-readable recording medium is any non-transitory data storage device that can store data which can be thereafter read by a computer system. Examples of a computer-readable recording medium may include read-only memory (ROM), random-access memory (RAM), CD-ROMs, magnetic tapes, floppy disks, optical data storage devices, etc. The computer-readable recording medium can also be distributed over network coupled computer systems so that the computer readable code is stored and executed in a distributed fashion.

The foregoing exemplary embodiments are merely exemplary and should not be construed as limiting the present invention. The present teaching can be readily applied to other types of methods and apparatuses. Also, the description of the exemplary embodiments of the present invention is intended to be illustrative, and not to limit the scope of the claims, and many alternatives, modifications, and variations will be apparent to those skilled in the art.

## Claims

1. A method for displaying and controlling a web page on a display device, the method comprising:
receiving web page information (S501);
grouping the web page information into at least one segment;
displaying a web page (S505) based on the web page information and a selector which is navigable among the at least one segment;
receiving a navigational command for navigating the selector; and
controlling the selector to move among the at least one segment based on the received navigational command.

2. The method of claim 1, wherein the web page information is grouped into the at least one segment based on a hierarchical organization of the web page information (S501).

3. The method of any preceding claim, wherein the web page information is organized according to a Document Object Model (DOM) hierarchy (S502), and the grouping of the web page information is based on the DOM hierarchy.

4. The method of any preceding claim, wherein a boundary line is displayed between each of the at least one segment.

5. The method of any preceding claim, wherein the web page is displayed so that each of the at least one segment is visually distinguishable.

6. The method of claim 5, wherein each of the at least one segment is visually distinguishable by displaying a boundary line between each of the at least one segment.

7. The method of any preceding claim, wherein the navigational command is received from a remote control.

8. The method of any preceding claim, wherein the selector is further navigable among the web page information within each of the at least one segment.

9. The method of any preceding claim, wherein the selector is operable to highlight and select a segment from among the at least one segment, and if the selection command is received and the segment is highlighted, the method further comprises selecting the highlighted segment.

10. The method of any preceding claim, wherein the web page information includes at least one hyperlink.

11. A display device comprising:
an input unit which receives web page information;
a segmenting unit which groups the web page information into at least one segment;
a display screen which displays a web page based on the web page information and a selector which is navigable among the at least one segment;
a command receiving unit is operable to receive a navigational command for navigating the selector; and
a controller, wherein if the navigational command is received, the controller controls the selector to move among the at least one segment based on the received navigational command.

12. The display device of claim 11, wherein the web page information is grouped into the at least one segment based on a hierarchical organization of the web page information.

13. The display device of any of claims 11 and 12, wherein the web page information is organized according to a Document Object Model (DOM) hierarchy, and wherein the segmenting unit groups the web page information based on the DOM hierarchy.

14. The display device of any of claims 11 to 13, wherein a boundary line is displayed between each of the at least one segment.

15. The display device of any of claims 11 to 14, wherein the web page is displayed so that each of the at least one segment is visually distinguishable.
